# EUROPÄISCHE PATENTSCHRIFT

(11) **EP 1 965 107 B1**
(45) Veröffentlichungstag und Bekanntmachung des Hinweises auf die Patenterteilung: **14.07.2010**
(21) Anmeldenummer: 07003980.5
(22) Anmeldetag: 27.02.2007
(51) Int. Cl.: F16J 15/32

(54) **Dichtring**
Sealing ring
Bague d'étanchéité

(43) Veröffentlichungstag der Anmeldung: 03.09.2008
(73) Patentinhaber: Carl Freudenberg KG, 69469 Weinheim (DE)
(72) Erfinder: Röhner, Gerhard, 69502 Hemsbach (DE); Sattler, Holger, 69483 Siedelsbrunn (DE)

(56) Entgegenhaltungen:
- EP-A- 0 631 112
- EP-A- 1 593 886
- WO-A-2005/031195
- DE-A1- 19 912 135

## Beschreibung

### Technisches Gebiet

Die Erfindung betrifft einen Dichtring mit zumindest einer Dichtlippe, umfassend zumindest einen Temperatursensor zu Sensierung der Temperatur im Bereich der Dichtlippe, wobei die Dichtlippe zur radialen Anpressung an eine abzudichtende Oberfläche eine Ringwendelfeder aufweist.

Dichtringe sind allgemein bekannt und beispielsweise als Radialwellendichtring ausgebildet, mit einer Dichtlippe aus einem elastomeren Werkstoff, die die abzudichtende Oberfläche einer abzudichtenden Welle unter radialer Vorspannung dichtend umschließt.

### Stand der Technik

Aus der EP 0 631 112 A1 ist ein Dichtring mit zumindest einer Dichtlippe bekannt, umfassend zumindest einen Temperatursensor zur Sensierung der Temperatur im Bereich der Dichtlippe, wobei die Dichtlippe zur radialen Anpressung an eine abzudichtende Oberfläche eine Ringwendelfeder aufweist. Der Temperatursensor ist dabei zum Beispiel am Stützkörper des Dichtrings festgelegt oder am elastomeren Werkstoff, aus dem die Dichtlippe besteht.

In der DE 199 12 135 A1 ist ein Wellendichtring offenbart, mit einer Dichtlippe, in die ein Temperatursensor integriert ist. Die Temperaturmessung wird durchgeführt, um die thermischen Belastungen des Dichtsystems abschätzen zu können. Der Temperatursensor ist dabei bevorzugt durch ein Thermoelement gebildet, wobei der Temperaturverlauf beispielsweise axial entlang einer abzudichtenden Welle ermittelt werden kann.

Aus der DE 43 20 939 A1 ist eine Dichtung bekannt, bei der ein Hilfsglied als elektrischer Impulsgeber und/oder Sensor ausgebildet ist. Die Aufgabe, die durch diese Dichtung gelöst wird, wird darin gesehen, eine einfache Montierbarkeit zu gewährleisten, wobei Messwerte einer Mess-Stelle hochpräzise erfasst werden sollen. Der Temperatursensor kann mit der Oberfläche der Dichtlippe verklebt sein, wobei zur Temperaturerfassung bevorzugt ein Thermoelement zur Anwendung gelangt.

Aus dem "Bericht aus dem Institut für Maschinenelemente, Untersuchungen an PTFE-Wellendichtungen, Bericht Nr. 61", ist auf Seite 27 unter der Überschrift "Temperatur der Dichtlippe" beschrieben, dass die Temperatur der Dichtlippe mit Thermoelementen in der Dichtlippe gemessen werden kann. Die Dichtlippe ist dabei mit Thermoelementen bestückt, wobei mehrere Thermoelemente zur Anwendung gelangen können, um die axiale Temperaturverteilung in der Dichtlippe zu bestimmen.

Aus der US 2001/0030396 A1 ist eine Dichtungsanordnung bekannt, mit einem Temperatursensor zur Vermittlung der Temperatur in der Nähe der Dichtung. Außerdem ist in dieser Offenlegungsschrift eine Auswerte-Elektronik beschrieben, die Ist-Werte mit Soll-Werten vergleicht, wobei durch diese Auswerte-Elektronik auch erforderliche Umrechnungen vorgenommen werden können. Der Temperatursensor kann direkt auf der Oberfläche der Dichtung angeordnet oder indirekt mit dieser verbunden sein. Die offenbarten Thermoelemente bilden einen Bestandteil der Dichtung. Die Temperaturerfassung erfolgt in einem Bereich von etwa - 40 °C bis etwa 316 °C.

Ein weiterer Dichtring mit Sensor ist aus der EP 1 593 886 A1 bekannt, wobei der Sensor mit einer in einen abzudichtenden Raum ragenden Messzunge 2a versehen ist, die während der bestimmungsgemäßen Verwendung mit abzudichtendem Medium beaufschlagbar ist. Der Sensor ist im Stützkörper des Dichtrings festgelegt.

Aus der WO 2005 031195 A1 ist ein O-Ring-förmiger Dichtring bekannt, in dessen Innerem ein Sensor angeordnet ist, der signalleitend mit einer Auswerte-Elektronik verbunden ist.

### Darstellung der Erfindung

Der Erfindung liegt die Aufgabe zugrunde, einen Dichtring der eingangs genannten Art derart weiterzuentwickeln, dass eine Temperatursensierung durch einen Temperatursensor, der Bestandteil des Dichtrings ist, mit einer guten Genauigkeit und geringem Montageaufwand erreichbar ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Temperatursensor an der Ringwendelfeder festgelegt ist. Durch die Temperaturerfassung im Bereich der Dichtlippe ist von Vorteil, dass dieser in thermischer Hinsicht kritische Bereich, beispielsweise aus Gründen des Explosionsschutzes, überwacht werden kann. Dadurch kann verhindert werden, dass kritische Temperaturen überschritten werden. In einer mit dem Temperatursensor verbundenen Auswerte-Elektronik kann ein Schwellenwert eingestellt werden, nach dessen Überschreitung ein Alarm ausgelöst und die Anlage sicherheitsabgeschaltet werden kann. Für besondere Anwendungsfälle hat es sich als vorteilhaft bewährt, wenn zumindest zwei unabhängige voneinander arbeitende Temperatursensoren einen Bestandteil des Dichtrings bilden.

Die Dichtlippe zur radialen Anpressung an eine abzudichtende Oberfläche weist eine Ringwendelfeder auf, wobei der Temperatursensor an der Ringwendelfeder festgelegt ist. Bei einer solchen Ausgestaltung befindet sich der Temperatursensor ebenfalls noch im Bereich der Dichtlippe, so dass die Temperatur in diesem kritischen Bereich vom Temperatursensor erfasst und signalleitend an die Auswerte-Elektronik weitergegeben wird. Bei einer solchen Ausgestaltung ist weiter von Vorteil, dass prinzipiell jeder herkömmliche Dichtring, der eine Ringwendelfeder aufweist, mit einem Temperatursensor versehen werden kann. Es bedarf lediglich noch einer elektrisch leitenden Verbindung zwischen dem Temperatursensor und der Auswerte-Elektronik. Es ist von Vorteil, dass keine Ausnehmungen oder Durchbrechungen im elastomeren Werkstoff der Dichtlippe vorgesehen werden müssen, um den Temperatursensor integrieren zu können. Weiter ist besonders vorteilhaft, dass der Temperatursensor räumlich in der Nähe der Dichtkante positioniert ist, die Ringwendelfeder gut Wärme leitet und leicht für die Sensorenapplikation zugänglich ist.

Bei einer Anordnung des Temperatursensors auf der Ringwendelfeder ist der Temperatursensor innerhalb des abzudichtenden Raums angeordnet, so dass das Messergebnis nicht durch eine Beaufschlagung des Temperatursensors mit den Bedingungen aus der Umgebung verfälscht wird.

Der Temperatursensor kann adhäsiv mit der Ringwendelfeder verbunden sein. Eine solche Verbindung ist einfach und kostengünstig herstellbar.

Der Temperatursensor und die Ringwendelfeder können eine vormontierbare Einheit bilden. Hierbei ist von Vorteil, dass der Temperatursensor mit der Ringwendelfeder verbunden werden kann, bevor die Ringwendelfeder an der Dichtlippe montiert wird. Das Handling zur Herstellung des Dichtrings ist dadurch vereinfacht.

Der Temperatursensor kann auf der der Dichtlippe radial abgewandten Seite der Ringwendelfeder angeordnet sein. Dadurch ist der Temperatursensor direkt mit der Temperatur aus dem abzudichtenden Raum beaufschlagbar.

Der Temperatursensor kann auf einem Federschloss der Ringwendelfeder angeordnet sein. Hierbei ist von Vorteil, dass die Funktion der Ringwendelfeder nicht beeinträchtigt und damit die Dichtfunktion des Dichtrings nicht gestört wird.

Die Dichtlippe kann aus einem üblichen Dichtungswerkstoff, beispielsweise aus einem elastomeren Werkstoff oder aus PTFE bestehen. Für viele Anwendungsfälle sind Dichtringe mit Dichtlippen aus elastomerem Werkstoff in einer Vielzahl von Abmessungen einfach herstellbar und dadurch kostengünstig verfügbar.

Der Temperatursensor ist signalleitend mit einer Auswerte-Elektronik verbunden. Die Auswerte-Elektronik kann beispielsweise, abhängig vom Einbauort des Temperatursensors im Dichtring, ein Temperaturgefälle berücksichtigen. Wie zuvor beschrieben, können in die Auswerte-Elektronik Schwellenwerte eingegeben werden, bei deren Überschreitung ein Alarm ausgelöst und die Anlage, in der der Dichtring zur Anwendung gelangt, sicherheitsabgeschaltet wird.

Der Alarm kann optisch und/oder akustisch erfolgen.

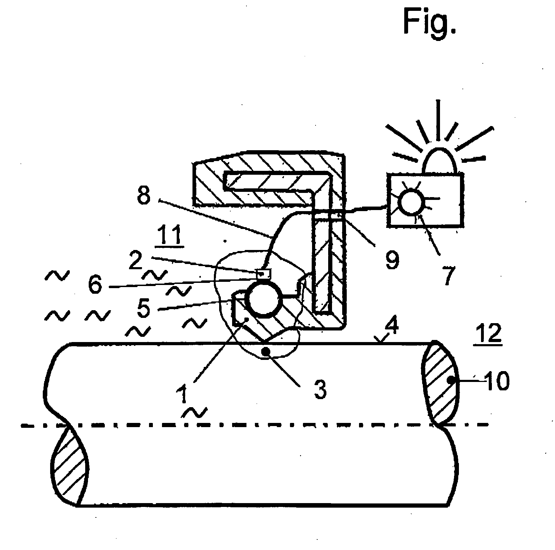

### Kurzbeschreibung der Zeichnung

Ein Ausführungsbeispiel des erfindungsgemäßen Dichtrings wird nachfolgend anhand der Figur näher erläutert.

### Ausführung der Erfindung

In der Figur ist ein schematisch dargestellter Dichtring gezeigt, der als Radialwellendichtring ausgebildet ist und mit seiner Dichtlippe 1 die Oberfläche 4 einer abzudichtenden Welle 10 unter radialer Vorspannung dichtend umschließt. Der Dichtring dichtet den abzudichtenden Raum 11 gegenüber der Umgebung 12 flüssigkeitsdicht ab.

Die Dichtlippe 1. des Dichtrings besteht in diesem Ausführungsbeispiel aus einem elastomeren Werkstoff, wobei der Dichtring zur Sensierung der Temperatur im Bereich 3 der Dichtlippe 1 einen Temperatursensor 2 aufweist. Der Temperatursensor 2 ist in dem gezeigten Ausführungsbeispiel auf dem Federschloss 6 der Ringwendelfeder 5 angeordnet.

Der Temperatursensor 2 ist mit der Ringwendelfeder 5 durch eine Verklebung adhäsiv verbunden.

Der Temperatursensor 2 ist durch das Sensorkabel 8 mit der Auswerte-Elektronik 7 signalleitend verbunden, wobei das Sensorkabel 8 durch eine Kabeldurchführung 9, die in den Radialschenkel des Dichtrings integriert ist, geführt ist.

Die Auswerte-Elektronik 7 kann derart justiert sein, dass bei Überschreitung eines Temperatur-Schwellenwertes ein optischer und/oder akustischer Alarm ausgelöst wird.

Alternativ zu dem hier dargestellten Ausführungsbeispiel besteht auch die Möglichkeit, dass der Temperatursensor 2 am elastomeren Werkstoff der Dichtlippe 1 angeordnet ist.

## Patentansprüche

1. Dichtring mit zumindest einer Dichtlippe (1), umfassend zumindest einen Temperatursensor (2) zur Sensierung der Temperatur im Bereich (3) der Dichtlippe (1), wobei die Dichtlippe (1) zur radialen Anpressung an eine abzudichtende Oberfläche (4) eine Ringwendelfeder (5) aufweist, **dadurch gekennzeichnet, dass** der Temperatursensor (2) an der Ringwendelfeder (5) festgelegt ist.

2. Dichtring nach Anspruch 1, **dadurch gekennzeichnet, dass** der Temperatursensor (2) adhäsiv mit der Ringwendelfeder (5) verbunden ist.

3. Dichtring nach einem der Ansprüche 1 oder 2, **dadurch gekennzeichnet, dass** der Temperatursensor (2) auf der der Dichtlippe (1) radial abgewandten Seite der Ringwedelfeder (5) angeordnet ist

4. Dichtring nach einem der Ansprüche 1 bis 3, **dadurch gekennzeichnet, dass** der Temperatursensor (2) auf einem Federschloss (6) der Ringwendelfeder (5) angeordnet ist.

5. Dichtring nach einem der Ansprüche 1 bis 4, **dadurch gekennzeichnet, dass** die Dichtlippe (1) aus einem elastomeren Werkstoff besteht.

6. Dichtring nach einem der Ansprüche 1 bis 5, **dadurch gekennzeichnet, dass** der Temperatursensor (2) signalleitend mit einer Auswerte-Elektronik (7) verbunden ist.

## Claims

1. Sealing ring with at least one sealing lip (1), comprising at least one temperature sensor (2) for sensing the temperature in the region (3) of the sealing lip (1), wherein the sealing lip (1) has an annular helical spring (5) for pressing said sealing lip radially against a surface (4) which is to be sealed, **characterized in that** the temperature sensor (2) is fixed to the annular helical spring (5).

2. Sealing ring according to Claim 1, **characterized in that** the temperature sensor (2) is connected adhesively to the annular helical spring (5).

3. Sealing ring according to either of Claims 1 and 2, **characterized in that** the temperature sensor (2) is arranged on that side of the annular helical spring (5) which faces radially away from the sealing lip (1).

4. Sealing ring according to one of Claims 1 to 3, **characterized in that** the temperature sensor (2) is arranged on a spring lock (6) of the annular helical spring (5).

5. Sealing ring according to one of Claims 1 to 4, **characterized in that** the sealing lip (1) is composed of an elastomeric material.

6. Sealing ring according to one of Claims 1 to 5, **characterized in that** the temperature sensor (2) is connected in a signal-conducting manner to an electronic evaluation system (7).

## Revendications

1. Bague d'étanchéité comprenant au moins une lèvre d'étanchéité (1), comprenant au moins un capteur de température (2) pour détecter la température dans la région (3) de la lèvre d'étanchéité (1), la lèvre d'étanchéité (1) présentant un ressort annulaire enroulé (5) pour appliquer une pression radiale contre une surface (4) à étancher, **caractérisée en ce que** le capteur de température (2) est fixé au ressort annulaire enroulé (5).

2. Bague d'étanchéité selon la revendication 1, **caractérisée en ce que** le capteur de température (2) est connecté de manière adhésive au ressort annulaire enroulé (5).

3. Bague d'étanchéité selon l'une quelconque des revendications 1 ou 2, **caractérisée en ce que** le capteur de température (2) est disposé du côté du ressort annulaire enroulé (5) opposé radialement à la lèvre d'étanchéité (1).

4. Bague d'étanchéité selon l'une quelconque des revendications 1 à 3, **caractérisée en ce que** le capteur de température (2) est disposé sur une serrure à ressort (6) du ressort annulaire enroulé (5).

5. Bague d'étanchéité selon l'une quelconque des revendications 1 à 4, **caractérisée en ce que** la lèvre d'étanchéité (1) se compose d'un matériau élastomère.

6. Bague d'étanchéité selon l'une quelconque des revendications 1 à 5, **caractérisée en ce que** le capteur de température (2) est connecté par transmission des signaux à une électronique d'analyse (7).
